# EUROPÄISCHE PATENTSCHRIFT

(11) **EP 1 205 674 B1**
(45) Veröffentlichungstag und Bekanntmachung des Hinweises auf die Patenterteilung: **08.12.2004**
(21) Anmeldenummer: 01124549.5
(22) Anmeldetag: 13.10.2001
(51) Int. Cl.: F16B 13/06, F16B 35/04, F16B 5/02, F16B 13/12

(54) **Spreizdübel**
Expansion dowel
Cheville à expansion

(30) Priorität: 10.11.2000 DE 10055866
(43) Veröffentlichungstag der Anmeldung: 15.05.2002
(73) Patentinhaber: fischerwerke Artur Fischer GmbH & Co. KG, 72178 Waldachtal (DE)
(72) Erfinder: Daly, Aaron, 72178 Waldachtal (DE); Danz, Thomas, 72160 Horb (DE)

(56) Entgegenhaltungen:
- EP-A- 0 171 745
- DE-A- 19 915 474
- DE-U- 9 310 356
- GB-A- 2 091 368

## Beschreibung

Die Erfindung betrifft einen Spreizdübel mit den Merkmalen des Oberbegriffs des Anspruchs 1. Ein solcher Spreizdübel ist aus der EP-A-0 171 745 bekannt.

Derartige Spreizdübel weisen eine Dübelhülse auf, die durch Einschrauben einer Spreizschraube aufspreizbar und dadurch in einem Bohrloch verankerbar sind. Die Spreizschraube weist ein erstes und ein zweites Schraubengewinde auf, das jeweils bei in die Dübelhülse eingeschraubter Spreizschraube in Eingriff mit der Dübelhülse steht. Das zweite Schraubengewinde ist mit axialem Abstand vom ersten Schraubengewinde an der Spreizschraube angeordnet. Zum Aufspreizen kann die Dübelhülse Längsschlitze aufweisen, die sie in Spreizzungen unterteilt, so dass die Spreizschraube mit geringerem Drehmoment in die Dübelhülse einschraubbar und die Dübelhülse leichter aufspreizbar ist. Besteht die Dübelhülse aus einem elastischen Material, beispielsweise aus Kunststoff, kann sie auch ohne solche Schlitze ausgebildet sein.

Der Erfindung liegt die Aufgabe zu Grunde, die Verankerungskraft eines derartigen Spreizdübels zu erhöhen. Die Verankerungskraft ist die zum Ausziehen des in einem Bohrloch verankerten Spreizdübels notwendige Kraft.

Diese Aufgabe wird erfindungsgemäß durch die Merkmale des Anspruchs 1 gelöst. Die Dübelhülse weist eine erste Dehn- und/oder Solltrennstelle zwischen den Eingriffsbereichen der beiden Schraubengewinde bei in die Dübelhülse eingeschraubter Spreizschraube auf. Bereits durch die Verlängerung des erfindungsgemäßen Spreizdübels um die Länge des zweiten Schraubengewindes seiner Spreizschraube und dessen axialem Abstand vom ersten Schraubengewinde wird eine Erhöhung der Verankerungskraft des Spreizdübels in einem Bohrloch erreicht. Die Verlängerung des Spreizdübels durch das zweite Schraubengewinde bringt insbesondere in Baustoffen geringer Festigkeit wie Gas- und Porenbeton Vorteile, da ein vom Spreizdübel ausgeübter Spreizdruck auf eine größere Länge verteilt ist. In einem Hohlbaustoff wie beispielsweise einem Lochziegel hat der erfindungsgemäße Spreizdübel den Vorteil, dass sich aufgrund der beiden Schraubengewinde seiner Spreizschraube mit hoher Wahrscheinlichkeit ein aufgespreizter Bereich der Dübelhülse zumindest in einem Steg des Lochziegels befindet, so dass der Spreizdübel verankert ist. Bei einem herkömmlichen Spreizdübel mit nur einem Schraubengewinde kann es vorkommen, dass sich ein aufgespreizter Bereich des Spreizdübels im Wesentlichen nur in einer Höhlung des Hohlbaustoffs befindet und der Spreizdübel deswegen nur schlecht verankert ist. Weiterer Vorteil des erfindungsgemäßen Spreizdübels ist, dass sich in einem Baustoff mit bereichsweise unterschiedlicher Festigkeit mit hoher Wahrscheinlichkeit zumindest ein aufgespreizter Abschnitt des Spreizdübels in einer Zone hoher Festigkeit des Baustoffs befindet und dadurch eine gute Verankerung bewirkt. Durch die erste Dehn- und/oder Solltrennstelle wird der erfindungsgemäße Spreizdübel in zwei vollständig oder zumindest teilweise voneinander unabhängige Spreizbereiche unterteilt, die den Spreizdübel in einem Bohrloch verankern. Ist die Verankerungskraft des Spreizdübels vor oder hinter der ersten Dehnund/oder Solltrennstelle geringer als im anderen Bereich, beeinträchtigt diese Verringerung der Verankerungskraft in einem Bereich auf einer Seite der ersten Dehn- und/oder Solltrennstelle die Verankerungskraft auf der anderen Seite der ersten Dehn- und/oder Solltrennstelle nicht oder zumindest weniger als bei einer keine Dehn- und/oder Solltrennstelle aufweisenden Dübelhülse.

Für eine sog. Durchsteckmontage weist die Dübelhülse des Spreizdübels bei einer Ausgestaltung der Erfindung einen seitlich abstehenden Bund auf. Dieser Bund kann ringscheibenförmig ausgebildet und in einer Radialebene angeordnet oder beispielsweise auch trichterförmig zur Aufnahme eines Senkkopfs der Spreizschraube ausgebildet sein. Der Bund übergreift einen zu befestigenden Gegenstand. Um zu vermeiden, dass der zu befestigende Gegenstand über den Bund eine Zugkraft auf die Dübelhülse ausübt, die deren Verankerungskraft im Bohrloch verringert, sieht diese Ausgestaltung der Erfindung eine zweite Dehn- und/oder Solltrennstelle vor, die zwischen dem Bund und dem Eingriffsbereich des zweiten Schraubengewindes in der Dübelhülse bei in die Dübelhülse eingeschraubter Spreizschraube angeordnet ist.

Bei einer Ausgestaltung der Erfindung weist die zweite Dehn- und/oder Solltrennstelle einen axialen Abstand vom Eingriffsbereich des zweiten Schraubengewindes in die Dübelhülse bei in die Dübelhülse eingeschraubter Spreizschraube auf.

Bei einer Ausgestaltung der Erfindung ist eine in Einschraubrichtung hintere Flanke des zweiten Schraubengewindes vergleichsweise flach zur Längsrichtung der Spreizschraube ausgerichtet, sie verläuft in einem Winkel von ca. 45° oder weniger zur Längsrichtung der Spreizschraube. Das zweite Schraubengewinde hat beispielweise ein sägezahnförmiges Gewindeprofil, wobei eine längere und in einem flacheren Winkel zur Längsrichtung der Spreizschraube verlaufende Gewindeflanke in Einschraubrichtung hinten angeordnet ist. Die in Einschraubrichtung hintere Flanke des zweiten Schraubengewindes bildet eine Schräg- oder Spreizfläche, die bei einer Axialbewegung der Spreizschraube in der Dübelhülse die Dübelhülse weiter aufspreizt. Die in Einschraubrichtung hintere Flanke des zweiten Schraubengewindes wirkt bei dieser Ausgestaltung wie ein kegelförmiger Spreizkörper, wobei sich die die Spreizfläche bildende hintere Flanke des zweiten Schraubengewindes wendelförmig um die Spreizschraube wendet. Diese Ausgestaltung der Erfindung hat folgenden Vorteil: Weitet sich ein Bohrloch, in dem der erfindungsgemäße Spreizdübel verankert ist, beispielweise in Folge von Rissbildung auf, bewirkt ein Zug an der Spreizschraube eine Relativbewegung der Spreizschraube in der Dübelhülse. Diese Relativbewegung der Spreizschraube in der Dübelhülse bewirkt über die vergleichsweise flach zur Längsrichtung der Spreizschraube ausgerichtete hintere Flanke des zweiten Spreizschraubengewindes ein weiteres Aufspreizen der Dübelhülse, also ein Nachspreizen des Spreizdübels. Durch das Nachspreizverhalten weist der erfindungsgemäße Spreizdübel auch bei einer Bohrlocherweiterung eine hohe Verankerungskraft auf. Das Nachspreizverhalten wird durch die zwischen dem Bund der Dübelhülse und dem zweiten Schraubengewinde angeordnete zweite Dehn- und/oder Solltrennstelle begünstigt, da die zweite Dehn- und/oder Solltrennstelle eine von einem mit dem Spreizdübel befestigten Gegenstand auf die Dübelhülse ausgeübte Axialkraft zumindest verringert. Dadurch wird vermieden, dass eine solche Axialkraft bei einer Bohrlocherweiterung die Dübelhülse gemeinsam mit der Spreizschraube aus dem Bohrloch auszieht. Die zweite Dehn- und/oder Solltrennstelle begünstigt die Relativbewegung der Spreizschraube in der Dübelhülse, die das Nachspreizverhalten bewirkt.

Bei einer Ausgestaltung der Erfindung weist die Dübelhülse V-förmige Schlitze für den Eingriff des ersten Schraubengewindes der Spreizschraube im Bereich ihres vorderen Endes auf. Dabei dient ein Schenkel der V-förmigen Schlitze dem Eingriff des Schraubengewindes, durch ihren schrägen Verlauf ist dieser Schenkel der V-förmigen Schlitze einer Steigung des Schraubengewindes näherungsweise angepasst. Der andere Schenkel der V-förmigen Schlitze ermöglicht eine axiale Dehnung oder Stauchung der Dübelhülse und ermöglicht somit eine Anpassung an Gewinde mit unterschiedlicher Steigung.

Die Erfindung wird nachfolgend anhand eines in der Zeichnung dargestellten Ausführungsbeispiels näher erläutert. Es zeigen:
- Figur 1: eine Dübelhülse eines erfindungsgemäßen Spreizdübels in Seitenansicht; und
- Figur 2: eine Verwendung des Spreizdübels gemäß Figur 1 in einer Schnittdarstellung.

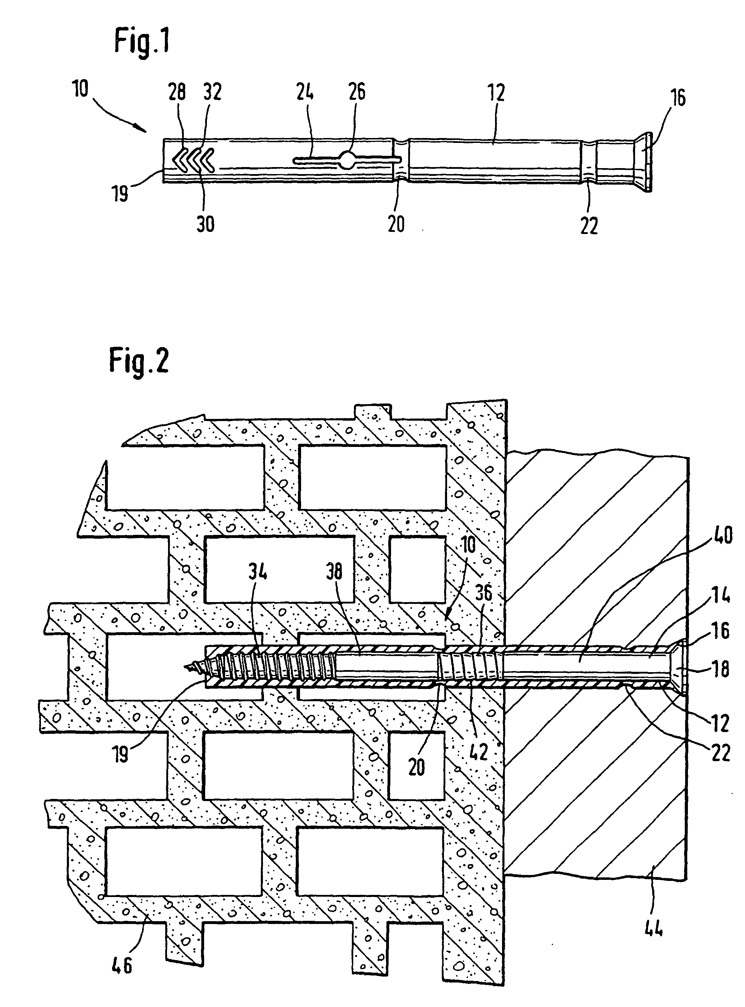

Der in der Zeichnung dargestellte, erfindungsgemäße Spreizdübel 10 weist eine Dübelhülse 12 aus Kunststoff und eine nur in Figur 2 dargestellte Spreizschraube 14 auf. Die Dübelhülse 12 ist im Wesentlichen rohrförmig, sie weist an einem hinteren Ende einen trichterförmigen, seitlich abstehenden Bund 16 zur Aufnahme eines Senkkopfs 18 der Spreizschraube 14 auf. Die Dübelhülse 12 weist zwei Dehn- und/oder Solltrennstellen 20, 22 auf, die als Einschnürungen in Form gerundeter, umlaufender Rillen ausgebildet sind. Bei axialem Zug auf die. Dübelhülse 12 dehnt sich diese an ihren Dehnund/oder Solltrennstelle 20, 22 und trennt sich bei Überschreiten einer Reißkraft in zwei oder drei Teile. Eine erste Dehn- und/oder Solltrennstelle 20 ist von einer Längsmitte der Dübelhülse 12 etwas in Richtung eines vorderen Endes der Dübelhülse 12 versetzt angeordnet. Eine zweite Dehn- und/oder Solltrennstelle 22 ist mit axialem Abstand vom Bund 16 also im hinteren Bereich der Dübelhülse 12 angeordnet.

Von der vorderen Dehn- und/oder Solltrennstelle 20 erstrecken sich zwei einander gegenübertiegend angeordnete Längsschlitze 24 ein Stück weit in Richtung des vorderen Endes 19 der Dübelhülse 12. Die Längsschlitze 24 weisen in ihrer Längsmitte eine kreisförmige Erweiterung 26 auf. Die Längsschlitze 24 erleichtern ein Einbringen der Spreizschraube 14 und ein Aufweiten und Aufspreizen der Dübelhülse 12 in dem axialen Bereich der Dübelhülse 12, in dem die Längsschlitze 24 angeordnet sind. Im Bereich ihres vorderen Endes 19 weist die Dübelhülse 12 V-förmige Schlitze 28 auf, von denen mehrere in Längsrichtung der Dübelhülse 12 hintereinander angeordnet sind. Außer den in Figur 1 sichtbaren V-förmigen Schlitzen 28 weist die Dübelhülse 12 gegenüberliegend angeordnete V-förmige Schlitze auf. Die V-förmigen Schlitze 28 sind mit ihrer Spitze nach vom gerichtet, ihre Schenkel 30, 32 verlaufen schräg nach hinten. Die Spreizschraube 14 besteht aus Metall, insbesondere aus Stahl. Sie weist ein erstes Schraubengewinde 34 und mit axialem Abstand dahinter ein zweites Schraubengewinde 36 auf. Zwischen den beiden Schraubengewinden 34, 36 und vom zweiten Schraubengewinde 36 zum Schraubenkopf 18 weist die Spreizschraube 14 gewindelose Schaftabschnitte 38, 40 auf. Während das erste Schraubengewinde 34 als herkömmliches Holzschrauben-, Dreiecks- oder Spitzgewinde ausgebildet ist weist das zweite Schraubengewinde 36 ein sägezahnförmiges Gewindeprofil auf. Eine längere und in einem spitzen Winkel, also flach zu einer Längsrichtung der Spreizschraube 14 verlaufende Flanke 42 ist in Einschraubrichtung der Spreizschraube 14 auf einer hinteren Seite angeordnet.

Die Funktion des erfindungsgemäßen Spreizdübels 10 wird nachfolgend anhand Figur 2 näher erläutert: Zur Befestigung eines Gegenstands 44 an einem Mauerwerk 46 wird ein Durchgangsloch durch den zu befestigenden Gegenstand 44 und ein Bohrloch in das Mauerwerk 46 gebohrt. Die Dübelhülse 12 wird in Durchsteckmontage durch das zu befestigende Bauteil 44 in das Bohrloch im Mauerwerk 46 eingebracht und die Spreizschraube 14 wird in die Dübelhülse 12 eingeschraubt. Die beiden Schraubengewinde 34, 36 sind selbstschneidend, die Dübelhülse 12 braucht daher nicht mit einem Gewinde versehen zu sein. Beim Einschrauben weitet und spreizt die Spreizschraube 14 die Dübelhülse 12 auf und verankert dadurch den Spreizdübel 10 im Bohrloch im Mauerwerk 46. Der Schraubenkopf 18 und der Bund 16 der Dübelhülse 12 übergreifen das zu befestigende Bauteil 44 an dessen dem Mauerwerk 46 abgewandter Seite und halten dadurch das Bauteil 44 am Mauerwerk 46. Wie in Figur 2 zu sehen befindet sich bei in die Dübelhülse 12 eingeschraubter Spreizschraube 14 die erste Dehn- und/oder Solltrennstelle 20 im Bereich eines vorderen Endes des zweiten Schraubengewindes 36. Die zweite Dehn- und/oder Solltrennstelle 22 befindet sich zwischen einem hinteren Ende des zweiten Schraubengewindes 36 und dem Schraubenkopf 18. Das erste Schraubengewinde 34 steht durch Formschluss in axial festem Eingriff mit der Dübelhülse 12..Das erste Schraubengewinde 34 greift auch in jeweils einen Schenkel 30 der V-förmigen Schlitze 28 am vorderen Ende der Dübelhülse 12 ein. Der andere Schenkel 32 ermöglicht eine axiale Dehnung oder Stauchung der Dübelhülse 12 und ermöglicht dadurch eine Anpassung an einen Abstand der Gewindegänge des ersten Schraubengewindes 34.

Wird bei einer Bohrlocherweiterung beispielsweise infolge einer Rissbildung im Mauerwerk 46 die Spreizschraube 14 axial beispielsweise vom zu befestigenden Bauteil 44 beaufschlagt, verschiebt sie sich axial in der Dübelhülse 12 nach hinten. Die hintere, in einem spitzen Winkel zur Längsrichtung der Spreizschraube 14 ausgerichtete Flanke 42 des zweiten Schraubengewindes 36 wirkt bei der Axialverschiebung der Spreizschraube 14 in der Dübelhülse 12 nach Art eines Spreizkonus, die hintere Flanke 42 spreizt die Dübelhülse weiter auf. Der erfindungsgemäße Spreizdübel 10 weist also ein Nachspreizverhalten auf, so dass er auch bei einer Bohrlocherweiterung eine hohe Verankerungskraft aufweist.

Die zweite Dehn- und/oder Solltrennstelle 22 begünstigt die für das Nachspreizen notwendige Relativbewegung der Spreizschraube 14 in der Dübelhülse 12, da sie eine Axialbewegung des hinteren Teils der Dübelhülse 12 gegenüber dem vorderen Teil der Dübelhülse 12 zulässt. Ebenso ermöglicht die erste Dehn- und/oder Solltrennstelle 20 eine Axialbewegung des vor ihr befindlichen Teils der Dübelhülse 12 gegenüber dem hinter ihr befindlichen Teil. Aufgrund der ersten Dehn- und/oder Solltrennstelle 20 lässt sich der erfindungsgemäße Spreizdübel 10 ähnlich zwei hintereinander angeordneten und insbesondere durch die Spreizschraube 14 miteinander verbundene Spreizdübeln ansehen. Die durch die erste Dehn- und/oder Solltrennstelle 20 herbeigeführte, gewisse Eigenständigkeit des Teils der Dübelhülse 12, der mit dem ersten Schraubengewinde 34 in Eingriff steht, und des Teils der Dübelhülse 12, der mit dem zweiten Schraubengewinde 36 in Eingriff steht, verbessert die Verankerung des Spreizdübels 10 insbesondere dann, wenn einer der beiden Teile der Dübelhülse 12 nur schlecht verankert ist.

## Patentansprüche

1. Spreizdübel (10) mit einer Dübelhülse (12) und mit einer Spreizschraube (14), die beim Einschrauben in die Dübelhülse(12) die Dübelhülse aufspreizt, wobei die Spreizschraube (14) ein erstes und ein zweites Schraubengewinde (34, 36) aufweist, das jeweils in eingeschraubtem Zustand mit der Dübelhülse(12) in Eingriff steht, wobei das zweites Schraubengewinde (36) in axialem Abstand vom ersten Schraubengewinde (34) angeordnet ist, **dadurch gekennzeichnet, dass** die Dübelhülse (12) eine erste Dehn- und/oder Solltrennstelle (20) aufweist, die bei in die Dübelhülse (12) eingeschraubter Spreizschraube (14) zwischen Eingriffsbereichen der beiden Schraubengewinde (34, 36) angeordnet ist.

2. Spreizdübel nach Anspruch 1, **dadurch gekennzeichnet, dass** die Dübelhülse (12) einen seitlich abstehenden Bund (16) an einem hinteren Ende aufweist, und dass die Dübelhülse (12) eine zweite Dehn- und/oder Solltrennstelle (22) zwischen dem Eingriffsbereich des zweiten Schraubengewindes (36) bei in die Dübelhülse eingeschraubter Spreizschraube (14) und dem Bund (16) aufweist.

3. Spreizdübel nach Anspruch 1, **dadurch gekennzeichnet, dass** die erste Dehnund/oder Solltrennstelle (20) axialen Abstand vom Eingriffsbereich des ersten Schraubengewindes (34) bei in die Dübelhülse (12) eingeschraubter Spreizschraube (14) aufweist.

4. Spreizdübel nach Anspruch 2, **dadurch gekennzeichnet, dass** die zweite Dehnund/oder Solltrennstelle (22) axialen Abstand von dem Eingriffsbereich des zweiten Schraubengewindes (36) bei in die Dübelhülse (12) eingeschraubter Spreizschraube (14) aufweist.

5. Spreizdübel nach Anspruch 2, **dadurch gekennzeichnet, dass** die zweite Dehnund/oder Solltrennstelle (22) axialen Abstand vom Bund (16) der Dübelhülse (12) aufweist.

6. Spreizdübel nach Anspruch 1, **dadurch gekennzeichnet, dass** eine in Einschraubrichtung hintere Flanke (42) des zweiten Schraubengewindes (36) einen Winkel von ca. 45° oder weniger zu einer Längsrichtung der Spreizschraube (14) aufweist.

7. Spreizdübel nach Anspruch 6, **dadurch gekennzeichnet, dass** das zweite Schraubengewinde (36) ein sägezahnförmiges Gewindeprofil aufweist, wobei eine längere und einen flacheren Winkel zur Längsrichtung der Spreizschraube (14) aufweisende Gewindeflanke (42) in Einschraubrichtung hinten angeordnet ist.

8. Spreizdübel nach Anspruch 1, **dadurch gekennzeichnet, dass** die Dübelhülse (12) V-förmige Schlitze (18) für den Eingriff des ersten Schraubengewindes (34) aufweist.

9. Spreizdübel nach Anspruch 1, **dadurch gekennzeichnet, dass** die Dübelhülse (12) aus Kunststoff besteht.

## Claims

1. Expansible fixing plug (10) having a fixing plug sleeve (12) and having an expansion screw (14) which, on being screwed into the fixing plug sleeve (12), expands the fixing plug sleeve, the expansion screw (14) having first and second screw threads (34, 36), each of which is in engagement with the fixing plug sleeve (12) in the screwed-in state, the second screw thread (36) being arranged axially spaced apart from the first screw thread (34), **characterised in that** the fixing plug sleeve (12) has a first stretching and/or intended separating zone (20), which is arranged between engagement regions of the two screw threads (34, 36) when the expansion screw (14) has been screwed into the fixing plug sleeve (12).

2. Expansible fixing plug according to claim 1, **characterised in that** the fixing plug sleeve (12) has a laterally projecting collar (16) at its rear end; and the fixing plug sleeve (12) has a second stretching and/or intended separating zone (22) between the engagement region of the second screw thread (36) and the collar (16) when the expansion screw (14) has been screwed into the fixing plug sleeve.

3. Expansible fixing plug according to claim 1, **characterised in that** the first stretching and/or intended separating zone (20) is axially spaced apart from the engagement region of the first screw thread (34) when the expansion screw (14) has been screwed into the fixing plug sleeve (12).

4. Expansible fixing plug according to claim 2, **characterised in that** the second stretching and/or intended separating zone (22) is axially spaced apart from the engagement region of the second screw thread (36) when the expansion screw (14) has been screwed into the fixing plug sleeve (12).

5. Expansible fixing plug according to claim 2, **characterised in that** the second stretching and/or intended separating zone (22) is axially spaced apart from the collar (16) of the fixing plug sleeve (12).

6. Expansible fixing plug according to claim 1, **characterised in that** that flank (42) of the second screw thread (36) which is to the rear in the screwing-in direction has an angle of about 45° or less relative to the longitudinal direction of the expansion screw (14).

7. Expansible fixing plug according to claim 6, **characterised in that** the second screw thread (36) has a sawtooth-shaped thread profile, that thread flank (42) which is longer and has a shallower angle relative to the longitudinal direction of the expansion screw (14) being arranged to the rear in the screwing-in direction.

8. Expansible fixing plug according to claim 1, **characterised in that** the fixing plug sleeve (12) has V-shaped slots (18) for engagement of the first screw thread (34).

9. Expansible fixing plug according to claim 1, **characterised in that** the fixing plug sleeve (12) is made from plastics material.

## Revendications

1. Cheville expansible (10) avec un manchon (12) et avec une vis d'expansion (14), qui écarte le manchon (12) au moment de son vissage dans le manchon (12), la vis d'expansion (14) comportant un premier et un deuxième filet (34, 36), dont chacun à l'état vissé engrène avec le manchon (12), le deuxième filet (36) étant agencé à une distance axiale du premier filet (34), **caractérisée en ce que** le manchon (12) comporte une première zone de dilatation et/ou de séparation théorique (20) qui, une fois que la vis d'expansion (14) est vissée dans le manchon (12), se situe entre les zones d'engrènement des deux filets (34, 36).

2. Cheville expansible selon la revendication 1, **caractérisée en ce que** le manchon (12) comporte au niveau de son extrémité arrière une collerette (16) en saillie latéralement et **en ce que** le manchon (12) comporte une deuxième zone de dilatation et/ou de séparation théorique (22) située entre la zone d'engrènement du deuxième filet (36), lorsque la vis d'expansion (14) est vissée dans le manchon (12), et la collerette (16).

3. Cheville expansible selon la revendication 1, **caractérisée en ce que** la première zone de dilatation et/ou de séparation théorique (20) est située à une distance axiale de la zone d'engrènement du premier filet (34) lorsque la vis d'expansion (14) est vissée dans le manchon (12).

4. Cheville expansible selon la revendication 2, **caractérisée en ce que** la deuxième zone de dilatation et/ou de séparation théorique (22) est située à une distance axiale de la zone d'engrènement du deuxième filet (36) lorsque la vis d'expansion (14) est vissée dans le manchon (12).

5. Cheville expansible selon la revendication 2, **caractérisée en ce que** la deuxième zone de dilatation et/ou de séparation théorique (22) est située à une distance axiale de la collerette (16) du manchon (12).

6. Cheville expansible selon la revendication 1, **caractérisée en ce qu'**un flanc arrière (42), dans le sens de vissage, du deuxième filet (36) forme un angle de 45° environ ou moins avec une direction longitudinale de la vis d'expansion (14).

7. Cheville expansible selon la revendication 6, **caractérisée en ce que** le deuxième filet (36) présente un profil de filetage en dents de scie, un flanc de filet (42) plus long et formant un angle plus plat avec la direction longitudinale de la vis d'expansion (14) étant disposé à l'arrière dans le sens de vissage.

8. Cheville expansible selon la revendication 1, **caractérisée en ce que** le manchon (12) comporte des fentes (18) en forme de V pour l'engrènement du premier filet (34).

9. Cheville expansible selon la revendication 1, **caractérisée en ce que** le manchon (12) est réalisé en matière plastique.
